(19) **Europäisches Patentamt**

**European Patent Office**

**Office européen des brevets**

(11) **EP 1 612 782 A2**

(12) **EUROPEAN PATENT APPLICATION**

(43) Date of publication:
04.01.2006 Bulletin 2006/01

(51) Int Cl.:
*G11B 7/135* (2006.01)

(21) Application number: 05105455.9

(22) Date of filing: 21.06.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: 30.06.2004 JP 2004193198

(71) Applicant: **KABUSHIKI KAISHA TOSHIBA**
**Tokyo 105-8001 (JP)**

(72) Inventors:
• **Maruyama, Sumitaka**
**Toshiba Corporation I.P.D.**
**105-8001, Tokyo (JP)**

• **Ogawa, Akihito**
**Toshiba Corporation I.P.D.**
**105-8001, Tokyo (JP)**
• **Iwata, Katsuo**
**Toshiba Corporation I.P.D.**
**105-8001, Tokyo (JP)**
• **Watabe, Kazuo**
**Toshiba Corporation I.P.D.**
**105-8001, Tokyo (JP)**

(74) Representative: **Henkel, Feiler & Hänzel**
**Möhlstrasse 37**
**81675 München (DE)**

(54) **Optical disc apparatus**

(57) An optical disc apparatus (11) of the invention, by locating, at a position displaced a predetermined distance from the focal point of a condenser lens (25), a light-receiving surface of a photodetector (26) for receiving a laser beam reflected from first and second recording layers of an optical disc, is configured, when playing back a signal from a certain recording layer, to decrease the difference in a crosstalk caused by a light reflected from other recording layers.

FIG. 2

EP 1 612 782 A2

**Description**

The present invention relates to an optical disc apparatus, which can simplify a signal playback system with little crosstalk, when playing back information from an optical disc having information recorded in two or more recording layers.

An optical disc used as an information recording medium is available in a play-only type represented by CD and DVD-ROM, a write-once type represented by CD-R and DVD-R, and a rewritable type used for an external memory of computer and a record-playback video (video recording).

Nowadays, to increase the recording capacity of the current standard DVD, research is being conducted to increase the number of recording layers to two or more. To do this, it is necessary to make the space layer between the recording layers thinner than in a current standard DVD. However, it is known that crosstalk between layers increases when the space layer is thin.

It is also known that there is an extreme change in the difference (magnification) between crosstalk produced in a second recording layer while playing back a first recording layer, and crosstalk produced in a first layer while playing back a second layer. This lowers the efficiency of zero-order light and the detection performance in a signal playback system using a ±first order diffraction light by combining an astigmatic aberration method and spot size method as a focus error detection system.

In a next-generation DVD (hereinafter referred to as an HD DVD), if, in order to increase the recording capacity, the space layer is made thinner than in a current dual layer DVD-ROM among standard DVDs having two or more recording layers, there is a problem that the crosstalk from the space layer is increased and a preferable playback signal cannot be obtained in a certain focus error detection system.

When the crosstalk difference is great, it is necessary to increase the dynamic range of the signal playback system. This increases the cost of the signal playback system, and raises the noise level.

According to an aspect of the present invention, there is provided an optical disc apparatus comprising:

a light source;
an object lens which condenses light from the
light source on at least one recording layer of a recording medium having at least two recording layers;
a condenser lens which imposes a predetermined convergence on light reflected from one recording layer of a recording medium having at least two recording layers; and
a photodetector which has a light-receiving
a surface at a position displaced a certain distance from the focal point of the condenser lens, receives light reflected from one recording layer of a recording medium having at least two recording layers, and outputs a signal corresponding to the intensity of the light.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a schematic illustration for explaining an example of a recording medium (an optical disc) applicable to an optical head unit according to an embodiment of the present invention;
FIG. 2 is a schematic illustration for explaining an essential part of an optical head unit according to an embodiment of the present invention;
FIGS. 3A and 3B are schematic illustrations for explaining the cause of a crosstalk from a space layer occurring when reflected laser beams are obtained from two recording layers by using the optical head unit shown in FIG. 2;
FIG. 4 is a graph for explaining changes in the crosstalk from the space layer explained with reference to FIG. 3 depending on the thickness of the space layer distance between recording layers of an optical disc, and the position of a photodetector;
FIG. 5 is a graph showing an example of a preferable position of a light-receiving surface of a photodetector defined according to the a value of the crosstalk from the space layer explained with reference to FIG. 3;
FIG. 6 is a graph for explaining suppression of the crosstalk from the space layer as a result of providing a photodetector at the position explained with reference to FIG. 5;
FIG. 7 is a schematic illustration showing an example of an optical head unit which satisfies conditions for a preferable position of a photodetector explained with reference to FIG. 4 to FIG. 6; and
FIG. 8 is a schematic sketch showing an example of an optical head unit which satisfies conditions for a preferable position of a photodetector explained with reference to FIG. 4 to FIG. 6.

Hereinafter, an embodiment of the present invention will be explained in detail with reference to the accompanying drawings.

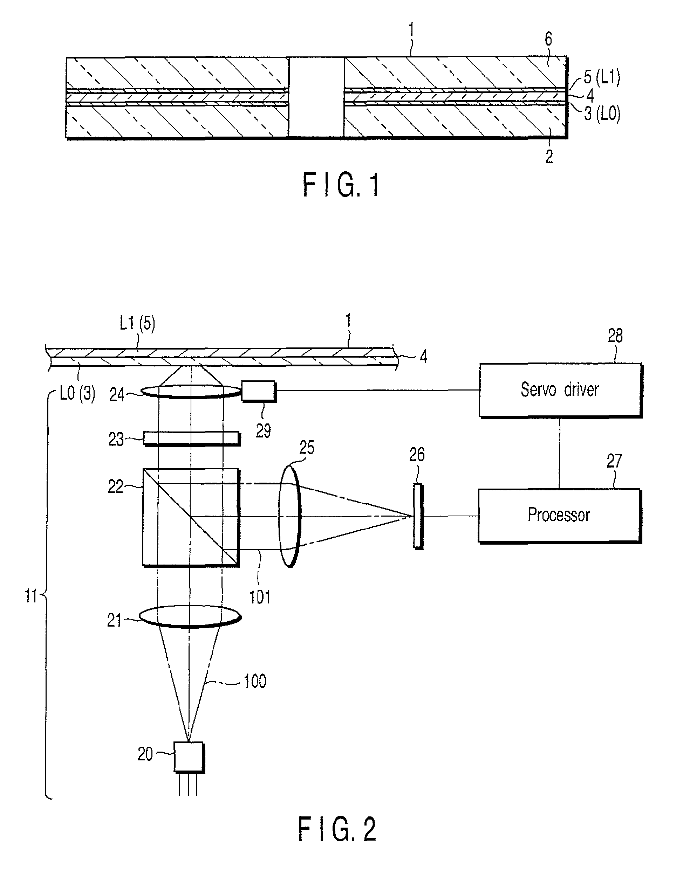

FIG. 1 is a schematic illustration of an example of an optical disc suitable for recording or playing back information with an optical head unit of the present invention to be explained with reference to FIG. 2.

As shown in FIG. 1, an optical disc (a recording medium) 1 has a first information recording layer 3 including a phase-change recording film, on a first substrate 2 made of polycarbonate.

On the first information recording layer 3, a space layer 4 having a predetermine transmittivity relative to a wavelength of laser beam emitted from a semiconductor laser unit 20 of an optical head unit 11, is stacked. On the space layer 4, a second information recording layer 5 is stacked. The space layer 4 is usually made of adhesive or ultraviolet hardening resin. The second information recording layer 5 is covered by a second substrate 6 made of polycarbonate.

In the optical disc 1, the information recording layers 3 and 5 may be a play-only (read-only) layer composed of a reflection film made of metal, or a record-playback (re-writable) layer composed of phase change film. Further, in the optical disc 1, only one of two recording layers 3 or 5 may be a play-only layer and the other may be a record-playback layer.

As described above, the optical disc 1 can be formed either by stacking the first substrate 2 and second substrate 6 in order, or by sticking two substrates having the information recording layer 3 (or 5) with a predetermined thickness to the space layer 4 to be faced to each other by means of adhesive material. Each of the substrates with the information recording layer formed on one side is about 0.6 mm thick, and the whole optical disc is about 1.2 mm thick (a thickness of the substrate for reference).

The optical disc 1 is a so-called one-side dual layer disc. The first information recording layer 3 is a semitransparent having a predetermined transmittivity relative to a wavelength of laser beam emitted from the semiconductor laser unit 20. Therefore, the first information recording layer 3 can transmit the remaining amount of light as well as reflecting a certain amount of light. Thus, when light is radiated to the optical disc 2 from the direction of the substrate 2, information can be recorded on one of the information recording layers 3 and 5, or information can be played back from one of the recording layers, by adjusting a focus to one of the first and second recording layers 3 and 5 (by controlling the position of an object lens 24, so that the distance between the object lens 24 and optical disc 1 relative to the position, where a laser beam 100 is condensed by convergence of the laser beam 100 through the object lens 24, becomes the same as the distance to one of the recording layers 3 and 5).

The space layer 4 has a function to optically interrupt a crosstalk from the other information recording layer 5 (or 3), while the information of one information recording layer 3 (or 5) is being played back. The crosstalk is a leakage light (beam) leaked from a difference information layer. In this sense, an interval between two information recording layers 3 and 5 is preferably separated as far as possible, and the space layer 4 is preferably thick. However, in that case, the load of the optical system for recording and playing back becomes heavy.

Namely, when the thickness from the surface of the substrate 2 to the center of the space layer 4 is defined as a load of an object lens described later with reference to FIG. 2, an aberration is caused by a thickness error in the half thickness of the space layer 4, in any case of recording or playing back information in/from the information recording layer 3 (or 5) .

Therefore, from the viewpoint of aberration in the recording/playing optical system, the space layer 4 is preferably thin. Namely, the thickness of the i space layer 4 is decided at a trade-off point between an aberration of the recording/playing back optics and a crosstalk between the information recording layers 3 and 5.

FIG. 2 is a schematic illustration for explaining an example of an optical head unit, which records information in the optical disc shown in FIG. 1, or plays back information from the optical disc. In FIG. 2, only the essential part of the optical head unit is explained.

As shown in FIG. 2, an optical head unit 11 has a semiconductor laser (a light source) 20 to output a laser beam or a purple light beam of 400-410 nm. A wavelength of the laser beam may be 440 nm or lower, for example, 405 nm.

A laser beam 100 emitted from the semiconductor laser 20 is collimated by a collimator lens 21. The collimated parallel beam passes through a polarizing beam splitter 22 and quarter-wavelength plate 23, and is guided by the object lens 24 to the recording surface of the optical disc 1 explained later with reference to FIG. 2.

The laser beam 100 guided by the optical disc 1 is condensed on one of the first and second recording layers, by the convergence given by the object lens 24 and the distance between the object lens and optical disc 1.

The laser beam 100 condensed on the recording layer of the optical disc 1 is reflected on the recording layer, returned to the object lens 24 as a reflected laser beam 101, and returned to a polarizing beam splitter 22 through the quarter-wavelength plate 23.

The reflected laser beam 101 returned to the polarizing beam splitter 22 is reflected toward the condenser lens 25 on the polarizing surface of the polarizing beam splitter 22, and forms an image on the light-receiving surface of a photodetector 26 as a convergent beam having a beam spot size corresponding to the focal distance defined by the convergence given by the condenser lens 25.

The light-receiving part of the photodetector is usually divided into several sections, each of which outputs a current corresponding to the light intensity. The current output from each light-receiving section is converted into a voltage by a not-shown I/V amplifier, and processed by a processor 27 to be usable as a HF (playback) signal, focus error signal and track error signal. The HF (playback) signal is converted into a predetermined signal format, or outputted to a temporary storage or external storage through a given interface.

The focus error signal and track error signal among those obtained by the processor 27 are converted by a servo driver 28 into signals usable as a focus control signal and track control signal to operate an actuator 29, which displaces the position of the object lens 24, and supplied to the actuator 29. Therefore, the object lens 24 held by the actuator 29 is optionally moved in the vertical direction to approach to and separate from the information recording layer 3 (or 5) of the optical disc 1, and/or in the disc radial direction. Namely, the object lens 24 is controlled by the servo driver 28 to follow the information track on the optical disc 1.

Description will be given on optimization of the elements of the optical head unit 11 for recording or playing back information in/from a new-standard optical disc called a next-generation DVD (hereinafter referred to as an HD DVD).

Assuming that the wavelength of a light source (the output of a semiconductor laser unit) is 405 nm and the numerical aperture NA of the object lens 24 is 0.65, the suitable thickness of the space layer 4 of the optical disc 1 is 15-25 $\mu$m as a specification of HD DVD considering the trade-off mentioned above. Conditions on the thickness of the space layer 4 described below are applicable to an optical disc having more than three information recording layers or a disc having two or more space layers.

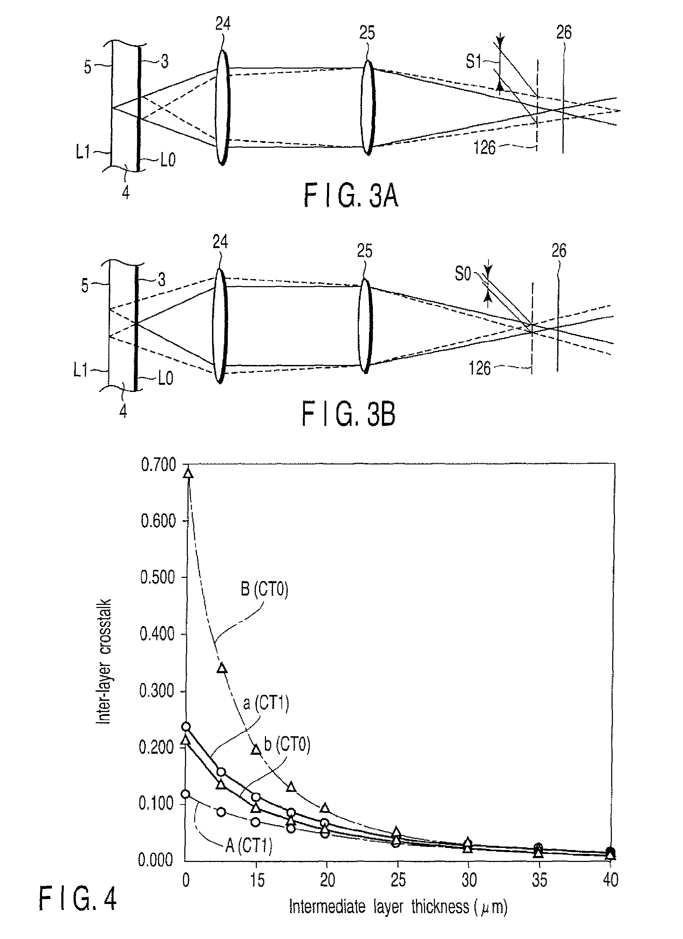

Description will now be given on a crosstalk upon playback from the space layer of a dual layer optical disc with reference to FIGS. 3A and 3B. In FIGS. 3A and 3B, a disc having two record-playback layers is taken as an example, but the result is the same as for a disc having more than three recording layers.

As shown in FIG. 3A, when a laser beam given convergence by the object lens 24 is focused on a record-playback layer 5 (L1) provided farther from the object lens 24, the reflected laser beam 101a (a solid line) from the information recording layer 5 (L1) becomes a parallel light after passing through the object lens 24, and is condensed on the condenser lens 25 and focused at a predetermined position near the photodetector 26. The reflected laser beam 101b (a dotted line) from the information recording layer 3 (L0) provided near the object lens 24 is focused at a position farther than the focal point of the reflected beam from the information recording layer 5 (L1).

On the other hand, as shown in FIG. 3B, when a laser beam given convergence by the object lens 24 is focused on a record-playback layer 3 (L0) provided near the object lens 24, the reflected laser beam 101c (a solid line) from the information recording layer 3 (L0) becomes a parallel light after passing through the object lens 24, and is condensed on the condenser lens 25 and focused at a predetermined position near the photodetector 26, or at substantially the same position as the focal point of the reflected laser beam 101a from the information recording layer 5 (L1) shown in FIG. 3A. In this case, the reflected laser beam 101d (a dotted line) from the information recording layer 5 (L1) provided farther from the object lens 24 is focused at a position in front of the focal point of the reflected beam from the information recording layer 3 (L0) or at the point near the condenser lens 25.

For an optical disc (dual layer) emitting a reflected laser beam as described above, consider placing the light-receiving surface of the photodetector 26 so that the photodetector is located at a position different from the focal point of the condenser lens (the position indicated by the dotted line as 126 in FIGS. 3A and 3B), as in an optical head unit which uses a photodetector both for focusing and for RF (a playback signal) by using astigmatic aberration for detecting a focus error. In this case, the sectional beam size of a reflected laser beam from L0 (the second recording layer 3) causing crosstalk when the beam is condensed on L1 (the first recording layer 5) is largely different from the sectional beam size of a reflected laser beam from L1 (the first recording layer 5) when the beam is condensed on L0 (the second recording layer), as indicated by S1 and S0 in FIGS. 3A and 3B.

In other words, the crosstalk from a non-focused-record-playback layer (the different layer either 3 or 5) differs depending on a recording layer on which a laser beam is condensed (focused, so-called on-focus) by the object lens 24.

This is seen from the crosstalk CT1 caused by a reflected laser beam from L1 when the beam is condensed on L0 indicated by the curve A ($\bigcirc$ and dotted line) in FIG. 4, and the crosstalk CT0 caused by a reflected laser beam from L0 when the beam is condensed on L1 indicated by the curve B ($\Delta$ and dotted line). In FIG. 4, the horizontal axis is plotted as a thickness of the space layer 4 between dual layers.

It is seen from the curves A and B that the signal amplitudes of two crosstalks (CT1 and CT0) are largely different. Thus, it is necessary to consider the larger crosstalk when designing dynamic range of an optical disk drive. This causes an increase in noise.

Conversely, consider placing the photodetector 26 at the position 26 indicated by the solid line in FIGS. 3A and 3B, that is, the position closer to the focal point of the condenser lens 25 than the position 126 indicated by the dotted line. In this case, as seen from FIGS. 3A and 3B, the beam spot of the reflected laser beam from L0 when the beam is condensed on L1 is substantially the same as the beam spot of the reflected laser beam from L1 when the beam is condensed at L0. As for the crosstalk to each reflected laser beam, as indicated by the curves a ($\bigcirc$ and solid line, CT1) and curve b ($\Delta$ and solid line, CT0), the difference between the crosstalk CT1 caused by a reflected laser beam from L1 when the beam is condensed at L0, and the crosstalk CT0 caused by a reflected laser beam from L0 when the beam is condensed at L1, becomes small compared with the case indicated by the curves A and B.

Therefore, the crosstalk caused by leak from two recording layers can be set within almost certain range regardless of the layer being recorded or played back. In this case, it is also possible to decrease a maximum value of crosstalk in an optical disc drive. It is suitable to set the crosstalk difference to twice or less from the viewpoint of dynamic range and a noise eliminating circuit.

It is known however that a signal for detecting a track error becomes small in a signal playback system (the object lens 24, condenser lens 25 and photodetector 26 in the optical head unit 11) capable of realizing the crosstalk indicated by the curve a (O and sold line, CT1) and curve b (△ and solid line, CT0).

Thus, it is preferable to set the size of the light-receiving part of the photodetector to a value obtainable by $A/M^2$ (the area A of a light-receiving part of a photodetector) and the detection lateral magnification M (a square of the ratio of the focal distance of the condenser lens 25 to the focal distance fo of an object lens) defined in Japanese Industrial Standards (JIS) X 6241 (1997). For example, when the focal distance fc of the condenser lens 25 is 80 mm, the area A of the light-receiving part of the photodetector is 16900 $\mu m^2$ and the lateral magnification M is 26.67, $A/M^2$ is obtained by

$$A/M^2 = 16900/(26.07)^2 = 23.76 \doteqdot 23.8 \ [\mu m^2]$$

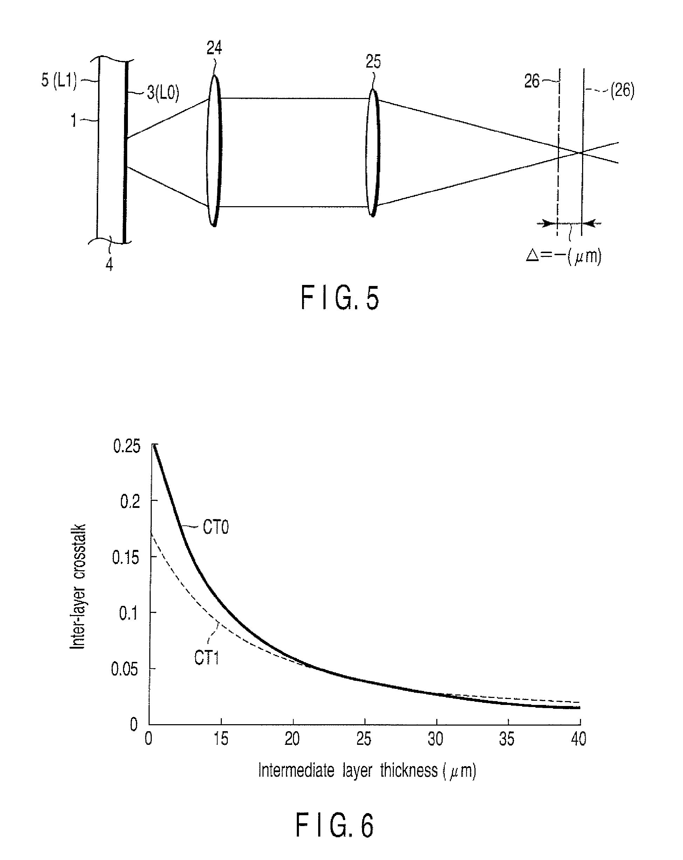

As shown by △ in FIG. 5, it is preferable to place the light-receiving surface of the photodetector 26 at a position of -1 mm relative to the focal point of the condenser lens 25 ("-1" indicates a position toward this side, that is, a position toward the condenser lens 25). It is confirmed that the difference (magnification) in the crosstalk when the light-receiving surface of the photodetector 26 is placed at the position indicated by △ in FIG. 5, that is, the difference between the crosstalk CT1 caused by a reflected beam from L1 when the beam is focused at L0, and the crosstalk CT0 caused by a reflected beam from L0 when the beam is focused on L1, is almost within two times regardless of the thickness of the space layer 4 between the recording layers 3 and 5.

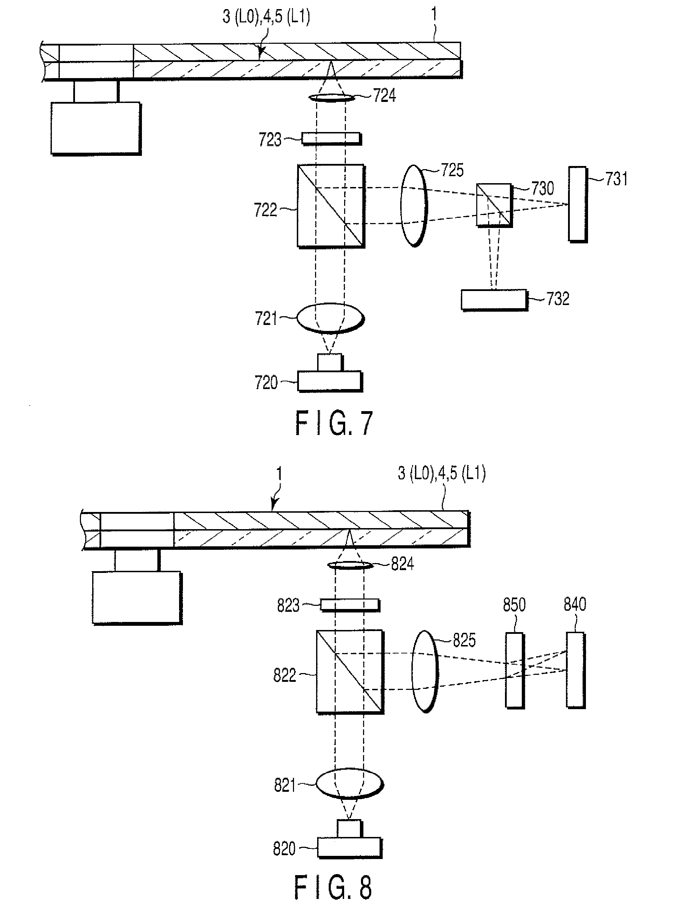

FIG. 7 is a schematic illustration showing an example of an optical head unit which satisfies conditions for a preferable position of a photodetector explained in FIG. 4 to FIG. 6. The same components (elements) and similar configuration as/to those of the schematic illustration of FIG. 2, 700 is added to the same reference numerals, and detailed explanation will be omitted.

As shown in FIG. 7, a laser beam with a wavelength of 405 nm emitted from a light source (a semiconductor laser unit) 720 is collimated by a collimator lens 21. The collimated parallel beam passes through a polarizing beam splitter 722 and quarter-wavelength plate 723, and is guided to the object lens 724. The laser beam guided to the object lens 724 is given a predetermined convergence in the object lens 724, and condensed on the first recording layer 3 (close to the object lens, L0) or second recording layer 5 (at the back of the space layer 4, L1).

The reflected laser beam from the first or second recording layer 3 (L0) or 5 (L1) of the optical disc 1 is captured by an object lens 724, transmitted through the quarter-wavelength plate 723, and reflected toward a beam splitter 730 by a polarizing beam splitter 722.

The reflected laser beam from the polarizing beam splitter 722 is given a predetermined convergence in a condenser lens 725, divided into two parts by the beam splitter 730, and condensed on a first photodetector 731 used for generating a focus error signal, and a second photodetector 732 used for generating a tracking error signal, respectively.

The second photodetector 732 for detection of tracking error is preferably placed at the position explained in FIG. 5. Namely, it is preferable to place a photodetector having a light-receiving surface area of 23.8 $\mu m^2$ at a position of -1 mm relative to the focal distance fc of the condenser lens, as defined by $A/M^2$, that is, the area A of a photodetector and a square of the ratio of a focal distance of a condenser lens to the focal distance fo of an object lens. This is caused by that the photodetector 732 for obtaining a tracking error signal can decrease dynamic range based on the detection principle and accuracy. (Which channel is "+" or "-" can be specified in a two-channel detector.)

The output from the second photodetector 732 for detecting a tracking error is added by a not-shown adder, and processed as an RF (playback) signal according to a predetermined regulation, or through a predetermined interface, and sent to a not-shown temporary storage or external storage.

A wavefront conversion element such as a hologram is effective as a method of placing a photodetector near a focal point of a detection system (a condenser lens). Namely, in an ordinary astigmatic optical system, it is difficult to place a photodetector at a focal point of a condenser lens.

When a focus error is detected by a knife edge method without using a wavefront conversion means, a tracking error signal is also obtained from an output of a photodetector to detect an RF signal. Thus, the beam spot becomes very small on the light-receiving surface of a photodetector, and easy to be affected by an offset of an object lens.

FIG. 8 explains an example of using a wavefront conversion means in the optical head unit shown in FIG. 7.

The same components (elements) and similar configuration as/to those of the schematic illustration of FIGS. 2 and 7, 800 is added to the same reference numerals, and detailed explanation will be omitted.

As shown in FIG. 8, a laser beam with a wavelength of 405 nm emitted from a light source (a semiconductor laser unit) 820 is collimated by a collimator lens 21. The collimated parallel beam passes through a polarizing beam splitter 822 and quarter-wavelength plate 823, and is guided to the object lens 824. The laser beam guided to the object lens 824 is given a predetermined convergence in the object lens 824, and condensed on the first recording layer 3 (close to the object lens side, L0) or second recording layer 5 (at the back of the space layer 4, L1).

The reflected laser beam from the first or second recording layer 3 (L0) or 5 (L1) of the optical disc 1 is captured by an object lens 824, transmitted through the quarter-wavelength plate 823, and reflected toward a beam splitter 830 by a polarizing beam splitter 822.

The reflected laser beam from the polarizing beam splitter 822 is given a predetermined convergence in a condenser lens 825. The advancing direction of the laser beam is changed to a predetermined position of a photodetector 840 by a wavefront conversion element or a hologram element 850 provided at a predetermined position between a photodetector 840 and a condenser lens 825. The laser beam is condensed on a light-detection area of the not-shown photodetector 840 for detecting a focus error used for generation of a focus error signal, and a light-detecting area for detecting a tracking error used for generation of a tracking error signal. The output from the light-detecting area for detecting a tracking error is added by a not-shown adder, and processed as an RF (playback) signal according to a predetermined regulation, or through a predetermined interface, and sent to a not-shown temporary storage or external storage.

The hologram element 850 is given a pattern which can give a specific sectional beam shape (a beam spot size) to a reflected laser beam give a predetermined convergence by the condenser lens 825, assuming that a knife edge method is used for detecting a focus error and a push-pull method is used for detecting a tracking error. Various well known methods are usable as a focus error detection method and a tracking error detection method.

As described hereinbefore, according to the present invention, a playback signal can be stably obtained from an optical disc having two or more recording layers without using a focus error detection method. When a playback signal is obtained from two or more recording layers, crosstalk can be controlled to twice, decreasing the load on a signal playback system.

In the detailed description of the invention, an optical disc drive is taken as an example for explaining the embodiment of the invention. But, it will be apparent that the invention is also applicable to a movie camera and portable audio equipment storing musical data.

**Claims**

**1.** An optical disc apparatus **characterized by** comprising:

a light source (20);
an object lens (24) which condenses light from the light source on at least one recording layer of a recording medium having at least two recording layers, the object lens has a predetermined numerical aperture;
a condenser lens (25) which imposes a predetermined convergence on light reflected from one recording layer of a recording medium having at least two recording layers (3, 5); and
a photodetector (26) which has a light-receiving
a surface at a position displaced a certain distance from the focal point of the condenser lens, receives light reflected from one recording layer of a recording medium having at least two recording layers, and outputs a signal corresponding to the intensity of the light.

**2.** The optical disc apparatus according to claim 1, **characterized in that** the light-receiving surface of the photodetector is placed at a position where a difference between the crosstalk caused by a reflected beam from one of the recording layer (3) when the beam is focused on the other of the recording layer (5) and the crosstalk caused by a reflected beam from the other of the recording layer (5) when the beam is focused on the one of the recording layer (5) is two times or less.

**3.** The optical disc apparatus according to claim 2, **characterized in that** the wavelength of light emitted from the light source is 440 nm or less.

**4.** The optical disc apparatus according to claim 1, **characterized in that** the numerical aperture of the object lens is 0.65.

5. The optical disc apparatus according to claim 1, **characterized in that** the thickness between recording layers of the recording medium is 15-25 $\mu$m.

6. An optical disc apparatus **characterized by** comprising:

an object lens which can condense light having a focal distance fo and wavelength 400-410 nm, on one recording layer (3) or (5) of a recording medium having at least a space layer (4) between a first recording layer and second recording layer, the object lens has a predetermined numerical aperture;
a condenser lens which can condense light having a focal distance fc and reflected from one recording layer of a recording medium, at a predetermined position; and
a photodetector having a light-receiving part with a light-receiving area of A, which receives light that is given a predetermined convergence by the condenser lens, and outputs a signal corresponding to the intensity of the light,
wherein $A/M^2$ of the object lens and condenser lens is defined within a predetermined range, so that the difference in a crosstalk among the recording layers is not increased more than twice, when a space layer is thicker than 15 $\mu$m; and the light-receiving surface is provided at a position displaced by $\Delta$ relative to the focal point of the condenser lens.

7. The optical disc apparatus according to claim 6, **characterized in that** the numerical aperture of the object lens is 0.65.

8. A method of specifying a position of a light-receiving surface of a photodetector which detects light from a recording medium in an optical disc driver, **characterized by** comprising:

placing a light-receiving surface of a photodetector to play back information from a recording medium by using light, at a position where the value of $A/M^2$ is smaller than a predetermined value, and a difference between the crosstalk caused by a reflected beam from one of the recording layer when the beam is focused on the other of the recording layer and the crosstalk caused by a reflected beam from the other of the recording layer when the beam is focused on the one of the recording layer is twice or less, when the focal distance of a first lens to take in light from the recording medium is fo; the area of a light-receiving surface of a photodetector to output a signal corresponding to the intensity of radiated light is A; the focal distance of a second lens to condense light on the light-receiving surface of the photodetector is fc; and fc/fo is M.

F I G. 1

F I G. 2

FIG. 3A

FIG. 3B

FIG. 4

F I G. 5

Intermediate layer thickness ($\mu$m)

F I G. 6

3 (L0),4,5 (L1)    1

724

723

725    730    731

722

721

732

720

F I G. 7

1    3 (L0),4,5 (L1)

824

823

850    840

822    825

821

820

F I G. 8